# EUROPEAN PATENT SPECIFICATION

(11) **EP 3 994 184 B1**
(45) Date of publication and mention of the grant of the patent: **01.05.2024**
(21) Application number: 20734537.2
(22) Date of filing: 24.06.2020
(51) Int. Cl.: C08F 4/651, C08F 110/06, C08F 4/654

(54) **CATALYST COMPONENTS FOR THE POLYMERIZATION OF OLEFINS**
KATALYSATORKOMPONENTEN ZUR POLYMERISIERUNG VON OLEFINEN
COMPOSANTS DE CATALYSEUR DE POLYMÉRISATION D'OLÉFINES

(30) Priority: 03.07.2019 EP 19184162
(43) Date of publication of application: 11.05.2022
(73) Proprietor: Basell Poliolefine Italia S.r.l., 20121 Milano (IT)
(72) Inventor: MIGNOGNA, Alessandro, 44122 Ferrara (IT); LIGUORI, Dario, 44122 Ferrara (IT); MORINI, Giampiero, 44122 Ferrara (IT)
(74) Representative: LyondellBasell
(86) International application number: PCT/EP2020/067640
(87) International publication number: WO 2021/001232

(56) References cited:
- WO-A1-2017/093132
- WO-A1-2018/091375
- WO-A2-2006/110234

## Description

### FIELD OF THE INVENTION

The present disclosure relates to catalyst components for the polymerization of olefins, in particular propylene, comprising a Mg dihalide based support on which are supported Ti atoms and an electron donor compound containing an ester and a carbamate functional group. The present disclosure further relates to the catalysts obtained from said components and to their use in processes for the polymerization of olefins in particular propylene.

### BACKGROUND OF THE INVENTION

Catalyst components for the stereospecific polymerization of olefins have been disclosed in the art. Concerning the polymerization of propylene, Ziegler-Natta catalysts are used which, in general terms, comprise a solid catalyst component, constituted by a magnesium dihalide on which are supported a titanium compound and an internal electron donor compound, used in combination with an Al-alkyl compound. Conventionally however, when a higher crystallinity of the polymer is desired, also an external donor (for example an alkoxysilane) is needed in order to obtain higher isotacticity. Esters of phthalic acid, particularly diisobutylphthalate, are used as internal donors in catalyst preparations. The phthalates are used as internal donors in combination with alkylalkoxysilanes as external donor. This catalyst system gives good performances in terms of activity, isotacticity and xylene insolubility.

In some instances, it is desirable to make polymers using catalyst systems that do not use phthalates as an electron donor.

Consequently, research activities have been devoted to discover alternative classes of internal donors for use in the preparation of catalyst components for propylene polymerization.

Some of the tested catalysts contain donors structures having contemporaneously carbamic groups and ester groups. PCT Publication No. WO2006/110234 describes 1,2-amino esters derivatives including one carbamate group and one free ester function. The catalysts generated by these structures have very low activity and sterospecificity in bulk propylene polymerization (See Table 2 of PCT Publication No. WO2006/110234).

### SUMMARY OF THE INVENTION

Surprisingly, the applicant has found that a class of donors containing both a carbamate and ester function within a specific structure deriving from amino acid generates catalysts showing a good balance of activity and stereospecificity.

Accordingly, it is an object of the present disclosure a catalyst component for the polymerization of olefins comprising Mg, Ti and an electron donor of formula (I) 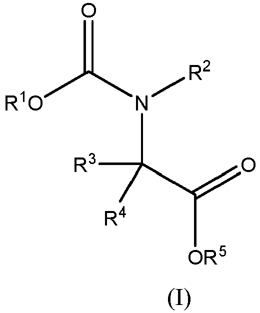 where the R¹ and R⁵ groups, equal to or different from each other, are selected from C₁-C₁₅ hydrocarbon groups, R² group is selected from C₂-C₁₀ hydrocarbon groups, R³ to R⁴ groups, independently, are selected from hydrogen or C₁-C₂₀ hydrocarbon groups, optionally fused together to form one or more cycles, with the proviso that at least one of R³ to R⁴ groups is a C₁C₂₀ alkyl group.

### DETAILED DESCRIPTION OF THE INVENTION

According to the present application the term "hydrocarbon group" also include the possible presence, in addition to carbon and hydrogen, in groups R¹ to R⁵ as defined above of a heteroatom selected from halogen, P, S, N,O and Si.

According to the present application the term "alkyl group" also include, if not separately specified, arylalkyl groups with the same carbon atom range deriving from alkyl groups by replacement of a hydrogen atom with an aryl group.

Preferably, R¹ is a C₁-C₁₀ alkyl group or arylalkyl group, more preferably a C₁-C₈ alkyl group. More preferably the alkyl group is a primary alkyl group.

Preferably, R² is selected from C₂-C₁₀ alkyl or C₇-C₁₀ arylalkyl groups, more preferably it is selected from C₃-C₁₀ alkyl groups or C₇-C₁₀ arylalkyl groups and especially from C₃-C₁₀ primary alkyl or primary C₇-C₁₀ arylalkyl groups .

Preferably, R³ is selected from branched C₃-C₁₅ alkyl or arylalkyl groups, more preferably a C₄-C₁₀ branched alkyl or arylalkyl groups, and especially from primary branched C₄-C₁₀ branched alkyl or arylalkyl groups.

R⁴ can be hydrogen or a C₁-C₁₅ alkyl group. More preferably R⁴ is hydrogen.

Preferred structures are those in which R³ is selected from branched C₃-C₁₅ alkyl or arylalkyl group and R⁴ is hydrogen.

Preferably, R⁵ is a C₁-C₁₀ alkyl group, more preferably a C₁-C₈ alkyl group. More preferably the alkyl group is a primary alkyl group.

Preferred structures of formula (I) are those in which R¹ and R⁵ are independently a C₁-C₁₀ alkyl group, R² is selected from C₂-C₁₀ alkyl or C₇-C₁₀ arylalkyl groups, R³ is selected from branched C₃-C₁₅ alkyl or arylalkyl groups and R⁴ is hydrogen.

Preferably, the final amount of electron donor compound in the solid catalyst component ranges from 1 to 25% by weight preferably in the range from 3 to 20% by weight.

Non-limiting examples of structures of formulas (I) are the following:.
ethyl N-(ethoxycarbonyl)-N-propylphenylalaninate, ethyl N-(ethoxycarbonyl)-N-isopropylphenylalaninate, ethyl N-(ethoxycarbonyl)-N-ethylphenylalaninate, ethyl N-(ethoxycarbonyl)-N-hexylphenylalaninate, ethyl N-decyl-N-(ethoxycarbonyl)phenylalaninate, ethyl N-(ethoxycarbonyl)-N-isobutylphenylalaninate, ethyl N-butyl-N-(ethoxycarbonyl)phenylalaninate, ethyl N-(ethoxycarbonyl)-N-isopropylleucinate, ethyl N-(ethoxycarbonyl)-N-propylleucinate, ethyl N-(ethoxycarbonyl)-N-ethylleucinate, ethyl N-(ethoxycarbonyl)-N-isobutylleucinate, ethyl N-butyl-N-(ethoxycarbonyl)leucinate, ethyl N-(ethoxycarbonyl)-N-hexylleucinate, ethyl N-decyl-N-(ethoxycarbonyl)leucinate, ethyl N-(ethoxycarbonyl)-N-propylvalinate, ethyl N-(ethoxycarbonyl)-N-ethylvalinate, ethyl N-(ethoxycarbonyl)-N-isobutylvalinate, ethyl N-butyl-N-(ethoxycarbonyl)valinate, ethyl N-(ethoxycarbonyl)-N-hexylvalinate, ethyl N-decyl-N-(ethoxycarbonyl)valinate, ethyl 2-((ethoxycarbonyl)(ethyl)amino)hexanoate, ethyl 2-((ethoxycarbonyl)(propyl)amino)hexanoate, ethyl 2-(butyl(ethoxycarbonyl)amino)hexanoate, ethyl 2-((ethoxycarbonyl)(isobutyl)amino)hexanoate, ethyl 2-(decyl(ethoxycarbonyl)amino)hexanoate, ethyl 2-((ethoxycarbonyl)(hexyl)amino)hexanoate, ethyl 2-((ethoxycarbonyl)(isopropyl)amino)hexanoate, ethyl 2-((ethoxycarbonyl)(propyl)amino)-3-methylpentanoate, ethyl N-(ethoxycarbonyl)-N-isopropylvalinate, ethyl 2-((ethoxycarbonyl)(ethyl)amino)-3 -methylpentanoate, ethyl 2-((ethoxycarbonyl)(isobutyl)amino)-3-methylpentanoate, ethyl 2-(butyl(ethoxycarbonyl)amino)-3-methylpentanoate, ethyl 2-((ethoxycarbonyl)(hexyl)amino)-3-methylpentanoate, ethyl 2-(decyl(ethoxycarbonyl)amino)-3-methylpentanoate, ethyl N-(ethoxycarbonyl)-N-isopropylalaninate, ethyl N-(ethoxycarbonyl)-N-propylalaninate, ethyl N-(ethoxycarbonyl)-N-ethylalaninate, ethyl N-(ethoxycarbonyl)-N-isobutylalaninate, ethyl 2-(butyl(ethoxycarbonyl)amino)butanoate, ethyl N-(ethoxycarbonyl)-N-hexylalaninate, ethyl N-decyl-N-(ethoxycarbonyl)alaninate, ethyl 2-((ethoxycarbonyl)(propyl)amino)-3-(p-tolyl)propanoate, ethyl 2-((ethoxycarbonyl)(isobutyl)amino)-3-(o-tolyl)propanoate, ethyl 2-(decyl(ethoxycarbonyl)amino)-3-mesitylpropanoate, ethyl 2-(butyl(ethoxycarbonyl)amino)-3-(naphthalen-2-yl)propanoate, ethyl 3-(4-chlorophenyl)-2-((ethoxycarbonyl)(ethyl)amino)propanoateethyl 3-(3,4-dimethylphenyl)-2-((ethoxycarbonyl)(hexyl)amino)propanoate, methyl 2-((ethoxycarbonyl)(isobutyl)amino)-3-phenylbutanoate, isobutyl 2-(butyl(ethoxycarbonyl)amino)-4-phenylbutanoate, ethyl 2-(isobutyl(methoxycarbonyl)amino)-3-methylpentanoate, methyl 2-(ethyl(methoxycarbonyl)amino)-3-methylpentanoate, ethyl N-hexyl-N-(propoxycarbonyl)valinate, ethyl N-hexyl-N-(propoxycarbonyl)valinate, butyl 2-((ethoxycarbonyl)(hexyl)amino)hexanoate, isobutyl 2-((butoxycarbonyl)(decyl)amino)-5-methylhexanoate, ethyl 1-(butyl(ethoxycarbonyl)amino)cyclohexane-1-carboxylate, ethyl 1-((ethoxycarbonyl)(isobutyl)amino)cyclopentane-1-carboxylate, ethyl 2-((ethoxycarbonyl)(isobutyl)amino)-2-ethylbutanoate, ethyl 2-((ethoxycarbonyl)(ethyl)amino)-2-isobutyl-4-methylpentanoate, ethyl 2-((ethoxycarbonyl)(hexyl)amino)-2-methylpropanoate

The compounds falling in formula (I) can be prepared by using the following synthetic route .

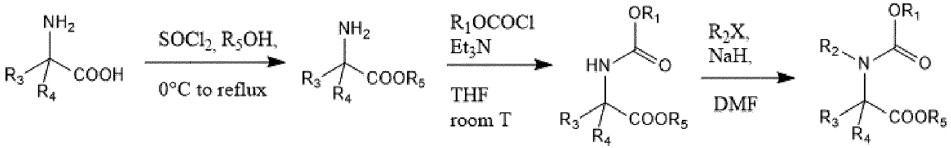

In the solid catalyst component of the disclosure the amount of Ti atoms is preferably higher than 2%wt more preferably higher than 2.50% with respect to the total weight of said catalyst component.

As explained above, the catalyst components of the disclosure comprise, in addition to the above electron donors, Ti, Mg and halogen. In particular, the catalyst components comprise a titanium compound, having at least a Ti-halogen bond and the above mentioned electron donor compounds supported on a Mg halide. The magnesium halide is preferably MgCh in active form which is described as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or cosupport in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present disclosure are TiCl₄ and TiCl₃; furthermore, also Ti-haloalcoholates of formula Ti(OR⁶)_{m-y}X_{y} can be used, where m is the valence of titanium, y is a number between 1 and m-1, X is halogen and R⁶ is a hydrocarbon radical having from 1 to 10 carbon atoms.

The preparation of the solid catalyst component can be carried out according to several methods. One method comprises the reaction between magnesium alcoholates or chloroalcoholates (in particular chloroalcoholates prepared according to USP 4,220,554) and an excess of TiCl₄ in the presence of the electron donor compounds at a temperature of 80 to 120°C.

According to a preferred method, the solid catalyst component can be prepared by reacting a titanium compound of formula Ti(OR⁷)_{m-y}X_{y}, where m is the valence of titanium and y is a number between 1 and m, preferably TiCl₄, with a magnesium chloride deriving from an adduct of formula MgCl₂•pR⁸OH, where p is a number between 0.1 and 6, preferably from 2 to 3.5, and R⁸ is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is lower than 3, preferably between 0.1 and 2.5. The reaction with the Ti compound can be carried out by suspending the adduct (dealcoholated or as such) in cold TiCl₄ (about 0°C); the mixture is heated up to 80-130°C and kept at this temperature for 0.5-2 hours. The treatment with TiCl₄ can be carried out one or more times. The electron donor compound is preferably added during the treatment with TiCl₄. The preparation of catalyst components in spherical form are described for example in European Patent Applications EP-A-395083, EP-A-553805, EP-A-553806, EPA601525 and WO98/44009.

The solid catalyst components obtained according to the above method show a surface area (by B.E.T. method) may range between 20 and 500 m²/g and preferably between 50 and 400 m²/g, and a total porosity (by B.E.T. method) higher than 0.2 cm³/g preferably between 0.2 and 0.6 cm³/g. The porosity (Hg method) due to pores with radius up to 10.000Å may range from 0.3 to 1.5 cm³/g, preferably from 0.45 to 1 cm³/g.

The solid catalyst component has an average particle size ranging from 5 to 120 µm and more preferably from 10 to 100 µm.

In any of these preparation methods the desired electron donor compounds can be added as such or, in an alternative way, it can be obtained *in situ* by using an appropriate precursor capable to be transformed in the desired electron donor compound by means, for example, of available chemical reactions.

Regardless of the preparation method used, the final amount of the electron donor compound of formula (I) is such that its molar ratio with respect to the Ti atoms ranges from 0.01:1 to 2:1, preferably from 0.05:1 to 1.5:1. The solid catalyst components according to the present disclosure are converted into catalysts for the polymerization of olefins by reacting them with organoaluminum compounds according to available methods.

In particular, it is an object of the present disclosure a catalyst for the polymerization of olefins CH₂=CHR, in which R is hydrogen or a hydrocarbyl radical with 1-12 carbon atoms, comprising the product obtained by contacting:
(i) the solid catalyst component as disclosed above and
(ii) an alkylaluminum compound and optionally,
(iii) an external electron donor compound.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt₂Cl and Al₂Et₃Cl₃, possibly in mixture with the above cited trialkylaluminums.

The external electron-donor compounds can include silicon compounds, ethers, esters, amines, and heterocyclic compounds.

Another class of preferred external donor compounds is that of silicon compounds of formula (R⁹)ₐ(R¹⁰)_{b}Si(OR¹¹)_{c}, where a and b are integers from 0 to 2, c is an integer from 1 to 4 and the sum (a+b+c) is 4; R⁹, R¹⁰, and R¹¹, are radicals with 1-18 carbon atoms optionally containing heteroatoms. Particularly preferred are the silicon compounds in which a is 1, b is 1, c is 2, at least one of R⁷ and R⁸ is selected from branched alkyl, cycloalkyl or aryl groups with 3-10 carbon atoms optionally containing heteroatoms and R⁹ is a C₁-C₁₀ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane, N,N-diethylaminotriethoxysilane. Moreover, are also preferred the silicon compounds in which a is 0, c is 3, R⁸ is a branched alkyl or cycloalkyl group, optionally containing heteroatoms, and R⁹ is methyl. Examples of such preferred silicon compounds are cyclohexyltrimethoxysilane, t-butyltrimethoxysilane and thexyltrimethoxysilane.

The electron donor compound (iii) is used in such an amount to give a molar ratio between the organoaluminum compound and said electron donor compound (iii) of from 0.1 to 500, preferably from 1 to 300 and more preferably from 3 to 100.

As explained, the catalyst components of the present disclosure, particularly when used in the polymerization of propylene in association with an aluminum alkyl compound and an alkyl alkoxysilane are able to produce polypropylene, under the polymerization conditions set forth in the experimental section, with a polymerization activity higher than 35 Kgpol/gcat preferably higher than 40 Kgpol/gcat and a xylene insolubility at 25°C higher than 96%wt, preferably higher than 97%wt.

Therefore, it constitutes a further object of the present disclosure a process for the (co)polymerization of olefins CH₂=CHR, in which R is hydrogen or a hydrocarbyl radical with 1-12 carbon atoms, carried out in the presence of a catalyst comprising the product of the reaction between:
(i) the solid catalyst component of the disclosure;
(ii) an alkylaluminum compound and,
(iii) optionally an electron-donor compound (external donor).

The polymerization process can be carried out according to available techniques for example slurry polymerization using as diluent an inert hydrocarbon solvent, or bulk polymerization using the liquid monomer (for example propylene) as a reaction medium. Moreover, it is possible to carry out the polymerization process in gas-phase operating in one or more fluidized or mechanically agitated bed reactors.

The polymerization may be carried out at temperature of from 20 to 120°C, preferably of from 40 to 80°C. When the polymerization is carried out in gas-phase the operating pressure may range between 0.5 and 5 MPa, preferably between 1 and 4 MPa. In the bulk polymerization the operating pressure ranges between 1 and 8 MPa, preferably between 1.5 and 5 MPa.

The following examples are given in order to further illustrate the disclosure without being intended as limiting it.

### CHARACTERIZATIONS

### Determination of X.I.

2.5 g of polymer and 250 ml of o-xylene were placed in a round-bottomed flask provided with a cooler and a reflux condenser and kept under nitrogen. The obtained mixture was heated to 135°C and was kept under stirring for about 60 minutes. The final solution was allowed to cool to 25°C under continuous stirring, and the insoluble polymer was then filtered. The filtrate was then evaporated in a nitrogen flow at 140°C to reach a constant weight. The content of said xylenesoluble fraction is expressed as a percentage of the original 2.5 grams and then, by difference, the X.I. %.

### Determination of donors.

The content of electron donor has been carried out via gas-chromatography. The solid component was dissolved in acidic water. The solution was extracted with ethyl acetate, an internal standard was added, and a sample of the organic phase was analyzed in a gas chromatograph, to determine the amount of donor present at the starting catalyst compound.

### Melt flow rate (MFR)

The melt flow rate MIL of the polymer was determined according to ISO 1133 (230°C, 2.16 Kg).

### EXAMPLES

### Procedure for preparation of the spherical adduct

An initial amount of microspheroidal MgCl₂2.8C₂H₅OH was prepared according to the method described in Example 2 of WO98/44009, but operating on larger scale.

### General procedure for the polymerization of propylene

A 4-litre steel autoclave equipped with a stirrer, pressure gauge, thermometer, catalyst feeding system, monomer feeding lines and thermostating jacket, was purged with nitrogen flow at 70°C for one hour. Then, at 30°C under propylene flow, were charged in sequence with 75 mL of anhydrous hexane, 0.76 g of AlEt₃, dicyclopentyl dimethoxysilane as external electron donor in order to have a Al/Donor molar ratio of 20, and 0.0067÷0.010 g of solid catalyst component. The autoclave was closed; subsequently 2.0 NL of hydrogen were added. Then, under stirring, 1.2 kg of liquid propylene was fed. The temperature was raised to 70°C in five minutes and the polymerization was carried out at this temperature for two hours. At the end of the polymerization, the non-reacted propylene was removed; the polymer was recovered and dried at 70°C under vacuum for three hours. Then the polymer was weighed and fractionated with o-xylene to determine the amount of the xylene insoluble (X.I.) fraction.

### General Procedure for the preparation of the solid catalyst component

Into a 500 cm³ round bottom flask, equipped with mechanical stirrer, cooler and thermometer 250 cm³ of TiCl₄ were introduced at room temperature under nitrogen atmosphere. After cooling to 0°C, while stirring, the internal donor of listed in table 1 and 10.0 g of the spherical adduct were sequentially added into the flask. The amount of charged internal donor was such to charge a Mg/donor molar ratio of 6. The temperature was raised to 100°C and maintained for 2 hours. Thereafter, stirring was stopped, the solid product was allowed to settle and the supernatant liquid was siphoned off at 100°C. After the supernatant was removed, additional fresh TiCl₄ was added to reach the initial liquid volume again. The mixture was then heated at 120°C and kept at this temperature for 1 hour. Stirring was stopped again, the solid was allowed to settle and the supernatant liquid was siphoned off. The solid was washed with anhydrous hexane six times (6 x 100 cm³) in temperature gradient down to 60°C and one time (100 cm³) at room temperature. The obtained solid was then dried under vacuum. The so obtained solid catalyst components were tested in polymerization of propylene, using the procedure described above. The results are listed in Table 1.

### EXAMPLE 1-11 and comparative examples 1-9

### Preparation of Solid Catalyst Component and polymerization

The general procedure for the preparation of the solid catalyst component 1 was carried out using the donor reported in table 1 as internal donor. The so obtained solid catalyst components were tested in polymerization of propylene, using the procedure described above. The results are listed in Table 1.

**Table 1**

| | **Catalyst compostion** | | | **Polymerization** | | |
|---|---|---|---|---|---|---|
| EX | Internal Donor | | Ti | Activity | XI | MIL |
| | **Structure / Name** | **%wt** | **%wt** | **kg/g** | **%wt** | **g/10'** |
| C1 | 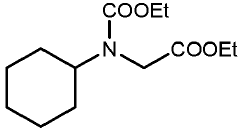 | 5.4 | 2.9 | 21 | 93.9 | 6.7 |
| C2 | 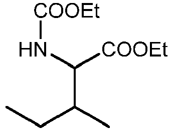 | 11.1 | 2.9 | 24 | 95.1 | 10.4 |
| C3 | 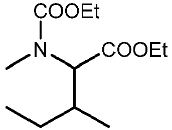 | 9.5 | 3.0 | 24 | 95.2 | 6.0 |
| 1 | 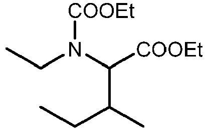 | 13.2 | 3.7 | 53 | 96.8 | 7.7 |
| 2 | 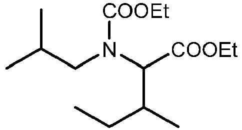 | 9.8 | 3.7 | 56 | 96.3 | 7.0 |
| 3 | 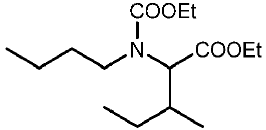 | 9.9 | 3.6 | 46 | 96.8 | 6.5 |
| 4 | 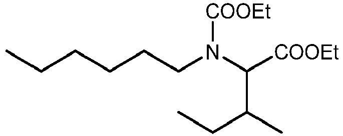 | 13.8 | 3.5 | 63 | 97.0 | 7.7 |
| C4 | 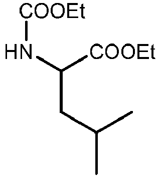 | 5.9 | 3.7 | 17 | 94.3 | 9.2 |
| 5 | 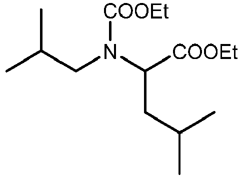 | 10.9 | 3.8 | 58 | 96.1 | 7.1 |
| C5 | 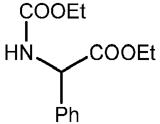 | 7.6 | 2.7 | 15 | 94.4 | 9.7 |
| C6 | 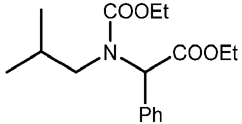 | 2.0 | 3.7 | 40 | 90.6 | 6.5 |
| C7 | 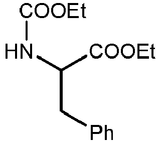 | 5.9 | 2.8 | 19 | 92.1 | 8.8 |
| 6 | 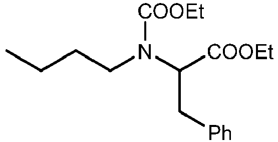 | 11.5 | 3.8 | 63 | 96.9 | 2.6 |
| 7 | 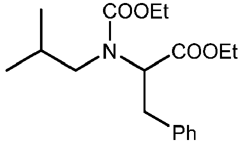 | 13.3 | 3.8 | 71 | 97.3 | 2.8 |
| 8 | 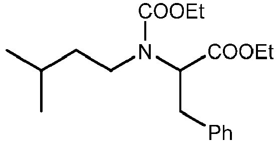 | 12.9 | 4 | 66 | 96.3 | 3.1 |
| 9 | 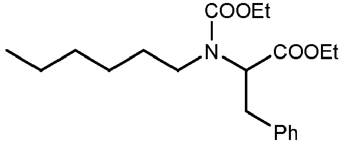 | 14.0 | 3.7 | 86 | 97.0 | 3.6 |
| 10 | 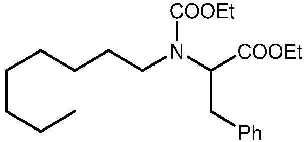 | 14.3 | 4.0 | 72 | 96.9 | 3.9 |
| 11 | 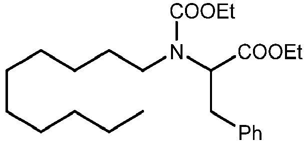 | 13.4 | 3.9 | 74 | 96.8 | 3.9 |
| C8 | 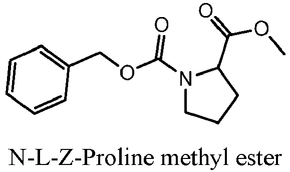 | n.d. | 5.4 | 13 | 93.1 | 6.9 |
| C9 | 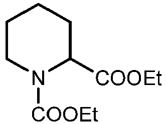 | 7.1 | 3 | 18 | 93.5 | 12.4 |

| | | | | | | |
|---|---|---|---|---|---|---|
| nd: not determined | | | | | | |

## Claims

1. A catalyst component for the polymerization of olefins comprising Mg, Ti and an electron donor of formula (I) 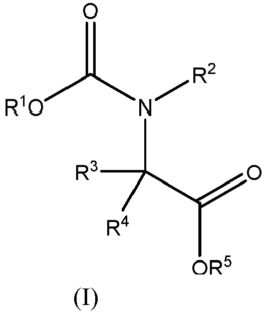 where the R¹ and R⁵ groups, equal to or different from each other, are selected from C₁-C₁₅ hydrocarbon groups optionally including a heteroatom selected from halogen, P, S, N,O and Si, R² group is selected from C₂-C₁₀ hydrocarbon groups optionally including a heteroatom selected from halogen, P, S, N,O and Si, R³ and R⁴ groups, independently, are selected from hydrogen or C₁-C₂₀ hydrocarbon groups optionally including a heteroatom selected from halogen, P, S, N, O and Si, optionally fused together to form one or more cycles, with the proviso that at least one of R³ to R⁴ groups is a C₁-C₂₀ alkyl group or arylalkyl group.

2. The catalyst component according to claim 1 in which R¹ is a C₁-C₁₀ alkyl group or arylalkyl group.

3. The catalyst component according to claim 1 in which R² is selected from C₂-C₁₀ alkyl or C₇-C₁₀ arylalkyl groups.

4. The catalyst component according to claim 3 in which R² is selected from C₃-C₁₀ alkyl groups or C₇-C₁₀ arylalkyl groups.

5. The catalyst component according to claim 4 in which R² is selected from C₃-C₁₀ primary alkyl or primary C₇-C₁₀ arylalkyl groups.

6. The catalyst component according to claim 1 in which R³ is selected from branched C₃-C₁₅ alkyl or arylalkyl groups.

7. The catalyst component according to claim 6 in which R³ is selected from primary branched C₄-C₁₀ branched alkyl or arylalkyl groups.

8. The catalyst component according to claim 6-7 in which R⁴ is hydrogen or a C₁-C₁₅ alkyl group.

9. The catalyst component according to claim 8 in which R⁴ is hydrogen.

10. The catalyst component according to claim 1 in which R⁵ is a C₁-C₁₀ alkyl group.

11. The catalyst component according to claim 10 in which R⁵ is a primary alkyl group.

12. The catalyst component according to claim 1 in which R¹ and R⁵ are independently a C₁-C₁₀ alkyl group, R² is selected from C₂-C₁₀ alkyl or C₇-C₁₀ arylalkyl groups, R³ is selected from branched C₃-C₁₅ alkyl or arylalkyl groups and R⁴ is hydrogen.

13. A catalyst for the polymerization of olefins comprising the product of the reaction between:
(i) the solid catalyst component according to any of the preceding claims and
(ii) an alkylaluminum compound.

14. The catalyst according to claim 13 further comprising an external electron donor compound.

15. A process for the (co)polymerization of olefins CH₂=CHR, in which R is hydrogen or a hydrocarbyl radical with 1-12 carbon atoms, carried out in the presence of a catalyst system comprising the product of the reaction between:
i. the solid catalyst component according to any of the proceeding claims; and
ii. an alkylaluminum compound.

## Patentansprüche

1. Katalysatorkomponente zur Polymerisation von Olefinen, umfassend Mg, Ti und einen Elektronendonor der Formel (I) 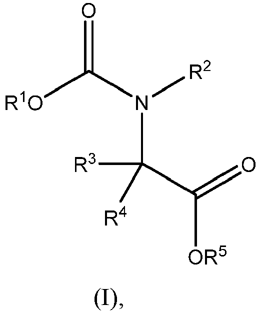 wobei die Gruppen R¹ und R⁵, die gleich oder voneinander verschieden sind, ausgewählt sind aus C₁- bis C₁₅-Kohlenwasserstoffgruppen, die gegebenenfalls ein Heteroatom ausgewählt aus Halogen, P, S, N,O und Si einschließen, die Gruppe R² ausgewählt ist aus C₂- bis C₁₀-Kohlenwasserstoffgruppen, die gegebenenfalls ein Heteroatom ausgewählt aus Halogen, P, S, N, O und Si einschließen, die Gruppen R³ und R⁴ unabhängig ausgewählt sind aus Wasserstoff oder C₁- bis C₂₀-Kohlenwasserstoffgruppen, die gegebenenfalls ein Heteroatom ausgewählt aus Halogen, P, S, N, O und Si einschließen, gegebenenfalls miteinander kondensiert sind, um einen oder mehrere Zyklen zu bilden, mit der Maßgabe, dass mindestens eine der Gruppen R³ bis R⁴ eine C₁- bis C₂₀-Alkylgruppe oder Arylalkylgruppe ist.

2. Katalysatorkomponente nach Anspruch 1, wobei R¹ eine C₁- bis C₁₀-Alkylgruppe oder Arylalkylgruppe ist.

3. Katalysatorkomponente nach Anspruch 1, wobei R² ausgewählt ist aus einer C₂- bis C₁₀-Alkylgruppe oder C₇- bis C₁₀-Arylalkylgruppe.

4. Katalysatorkomponente nach Anspruch 3, wobei R² ausgewählt ist aus einer C₃- bis C₁₀-Alkylgruppe oder C₇- bis C₁₀-Arylalkylgruppe.

5. Katalysatorkomponente nach Anspruch 4, wobei R² ausgewählt ist aus einer primären C₃-bis C₁₀-Alkylgruppe oder primären C₇- bis C₁₀-Arylalkylgruppe.

6. Katalysatorkomponente nach Anspruch 1, wobei R³ ausgewählt ist aus verzweigten C₃-bis Cis-Alkyl- oder -Arylalkylgruppen.

7. Katalysatorkomponente nach Anspruch 6, wobei R³ ausgewählt ist aus primären verzweigten C₄- bis C₁₀ Alkyl oder Arylalkylgruppen.

8. Katalysatorkomponente nach Anspruch 6 bis 7, wobei R⁴ Wasserstoff oder eine C₁- bis Cis-Alkylgruppe ist.

9. Katalysatorkomponente nach Anspruch 8, wobei R⁴ Wasserstoff ist.

10. Katalysatorkomponente nach Anspruch 1, wobei R⁵ eine C₁- bis C₁₀-Alkylgruppe ist.

11. Katalysatorkomponente nach Anspruch 10, wobei R⁵ eine primäre Alkylgruppe ist.

12. Katalysatorkomponente nach Anspruch 1, wobei R¹ und R⁵ unabhängig eine C₁- bis C₁₀-Alkylgruppe sind, R² ausgewählt ist aus C₂- bis C₁₀-Alkyl- oder C₇- bis C₁₀-Arylalkylgruppen, R³ ausgewählt ist aus verzweigten C₃- bis Cis-Alkyl- oder Arylalkylgruppen, und R⁴ Wasserstoff ist.

13. Katalysator zur Polymerisation von Olefinen, umfassend das Produkt der Reaktion zwischen:
(i) der festen Katalysatorkomponente nach einem der vorhergehenden Ansprüche und
(ii) einer Alkylaluminiumverbindung.

14. Katalysator nach Anspruch 13, des Weiteren umfassend eine externe Elektronendonorverbindung.

15. Verfahren zur (Co)polymerisation von Olefinen CH₂=CHR, worin R Wasserstoff oder ein Kohlenwasserstoffrest mit 1 bis 12 Kohlenstoffatomen ist, das in Gegenwart eines Katalysatorsystems durchgeführt wird, welches das Produkt der Reaktion zwischen:
i. der festen Katalysatorkomponente nach einem der vorhergehenden Ansprüche und
ii. einer Alkylaluminiumverbindung umfasst.

## Revendications

1. Constituant catalytique destiné à la polymérisation d'oléfines, comprenant du Mg, du Ti et un donneur d'électrons de formule (I) 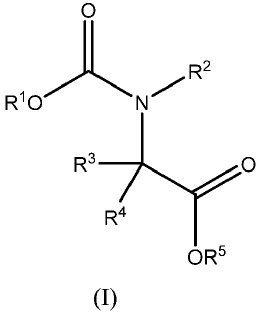 où les groupes R¹ and R⁵, identiques ou différents l'un de l'autre, sont choisis parmi les groupes hydrocarbonés en C₁-C₁₅ comprenant éventuellement un hétéroatome choisi parmi halogène, P, S, N, O et Si, le groupe R² est choisi parmi les groupes hydrocarbonés en C₂-C₁₀ comprenant éventuellement un hétéroatome choisi parmi halogène, P, S, N, O et Si, les groupes R³ et R⁴, indépendamment, sont choisis parmi hydrogène ou les groupes hydrocarbonés en C₁-C₂₀ comprenant éventuellement un hétéroatome choisi parmi halogène, P, S, N, O et Si, éventuellement condensés ensemble pour former un ou plusieurs cycles, à condition qu'au moins l'un des groupes R³ à R⁴ soit un groupe alkyle en C₁-C₂₀ ou un groupe arylalkyle.

2. Constituant catalytique selon la revendication 1, dans lequel R¹ représente un groupe alkyle en C₁-C₁₀ ou un groupe arylalkyle.

3. Constituant catalytique selon la revendication 1, dans lequel R² est choisi parmi les groupes alkyle en C₂-C₁₀ ou arylalkyle en C₇-C₁₀.

4. Constituant catalytique selon la revendication 3, dans lequel R² est choisi parmi les groupes alkyle en C₃-C₁₀ ou les groupes arylalkyle en C₇-C₁₀.

5. Constituant catalytique selon la revendication 4, dans lequel R² est choisi parmi les groupes alkyle primaire en C₃-C₁₀ ou arylalkyle primaire en C₇-C₁₀.

6. Constituant catalytique selon la revendication 1, dans lequel R³ est choisi parmi les groupes alkyle en C₃-C₁₅ ou arylalkyle ramifiés.

7. Constituant catalytique selon la revendication 6, dans lequel R³ est choisi parmi les groupes alkyle en C₄-C₁₀ ou arylalkyle primaires, ramifiés.

8. Constituant catalytique selon la revendication 6 à 7, dans lequel R⁴ représente hydrogène ou un groupe alkyle en C₁-C₁₅.

9. Constituant catalytique selon la revendication 8, dans lequel R⁴ représente hydrogène.

10. Constituant catalytique selon la revendication 1, dans lequel R⁵ représente un groupe alkyle en C₁-C₁₀.

11. Constituant catalytique selon la revendication 10, dans lequel R⁵ représente un groupe alkyle primaire.

12. Constituant catalytique selon la revendication 1, dans lequel R¹ et R⁵ représentent, indépendamment, un groupe alkyle en C₁-C₁₀, R² est choisi parmi les groupes alkyle en C₂-C₁₀ ou arylalkyle en C₇-C₁₀, R³ est choisi parmi les groupes alkyle en C₃-C₁₅ ou arylalkyle ramifiés et R⁴ représente hydrogène.

13. Catalyseur destiné à la polymérisation d'oléfines, comprenant le produit de la réaction entre :
(i) le constituant catalytique solide selon l'une quelconque des revendications précédentes et
(ii) un composé d'alkylaluminium.

14. Catalyseur selon la revendication 13, comprenant en outre un composé donneur d'électrons externe.

15. Procédé de (co)polymérisation d'oléfines CH₂=CHR, dans lesquelles R représente hydrogène ou un radical hydrocarbyle comprenant 1-12 atomes de carbone, mis en oeuvre en présence d'un système catalytique comprenant le produit de la réaction entre :
i. le constituant catalytique solide selon l'une quelconque des revendications précédentes ; et
ii. un composé d'alkylaluminium.
